# EUROPEAN PATENT APPLICATION

(11) **EP 3 226 570 A1**
(43) Date of publication of application: **04.10.2017**
(21) Application number: 16305382.0
(22) Date of filing: 31.03.2016
(51) Int. Cl.: H04N 21/43, H04N 21/422, H04N 21/439

(54) **SYNCHRONIZING AUDIO AND VIDEO SIGNALS RENDERED ON DIFFERENT DEVICES**

(71) Applicant: Thomson Licensing, 92130 Issy-les-Moulineaux (FR)
(72) Inventor: KERDRANVAT, Michel, 35576 Cesson-Sévigné (FR); STANG, Sébastien, 35510 Cesson-Sévigné (FR); BOUTEAU, Pierre-Olivier, 35510 Cesson-Sévigné (FR); JEANNE, Ludovic, 35576 Cesson-Sévigné (FR); PEAUDOUYE, Anne, 35576 Cesson-Sévigné (FR)
(74) Representative: Huchet, Anne

(57) **Abstract**

A device (200, 230, 250) and a method for synchronizing the rendering of an audio/visual signal on different devices comprising an audio rendering device (220, 250) and a video rendering device (210, 230). The method comprises a synchronization phase where a synchronization signal (410, 420) is emitted (310) on each rendering device, the synchronization signals (411, 421) are captured by a microphone (130) in the synchronization module, the difference between the captured synchronization signal is measured and determines the delay to be applied either on the audio or the video signal in order to ensure accurate "lip sync". The delay information is provided to a demultiplexer function (203, 233, 253) of the device allowing to delay either the video or the audio signal by caching the corresponding signal in memory (204, 234, 254) in its compressed form for the duration of the delay. The device is preferably a television, a broadcast receiver or an audiovisual bar.

## Description

### TECHNICAL FIELD

The present disclosure relates to the synchronization of audio and video signals rendered on different devices such as a TV for the video and a sound bar or an amplifier for the audio.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

A home cinema system is composed of a set of devices comprising at least rendering devices to render the audio/video signal and source devices such as a Set-Top-Box, a Blu-Ray player or a video game console. Video rendering devices such as televisions, projectors and head-mounted displays allow to display the images corresponding to the video signal. Audio rendering devices such as audio amplifiers connected to sets of loudspeakers, sound bars, and headphones allow to output the sound waves corresponding to the audio signal. Many topologies of devices are possible and different types of connections are applicable.

Each rendering device induces a latency for processing the signal. This latency varies depending on the type of signal, audio or video, between devices and also depends on the rendering mode chosen for a same device. For example, a television has video rendering modes with minimal processing for low latency applications such as games leading to a video latency of about 30ms. More complex processing enhances the quality of the picture at the cost of an increased video latency that can reach 300ms. In the case of audio, the processing is light in simple setups leading to audio latencies in the order of magnitude of 10ms. The difference of latency between the audio and the video signal generates a so-called lip sync issue, noticeable by the viewer when the delay between the image and the sound is too large: when the sound is advance with respect to the video of more than 45ms or when the sound is late with respect to the video of more than 125ms according to the recommendation BT.1359-1 of the International Telecommunication Union (ITU). A lip sync issue can severely impair the viewing experience. However, up to now, lip sync has always been considered in the case where video processing is longer than audio processing. This might change with the advent of 3D audio where more complex processing will be required on the audio signal, potentially causing audio latencies up to 100ms.

High-Definition Multimedia Interface (HMDI) provides a digital audio/video interface between a source device and a rendering device over a single cable. It defines, amongst other elements, the communication protocol providing interoperability between devices from different manufacturers in the HDMI specification. Since version 2.0, HDMI includes an optional mechanism to handle latencies: Dynamic Auto Lip Sync (DALS) that allows to exchange the latency values between devices. With DALS, an audio rendering will delay the rendering of the sound to adapt to the video latency of a compatible device, if needed. However, it is an optional feature of HDMI and therefore many devices do not implement it.

A conventional solution proposed by manufacturers of audio rendering devices to correct the lip sync is to manually enter a delay value. This solution relies on the capability of the viewer to adjust the delay value and therefore is very approximate. Another solution proposed in JP2013143706A discloses an audio rendering device that comprises emitting a test tone on both the audio rendering device and the video rendering device and, using an external microphone connected to the audio rendering device, and measuring the delay between the test tones from both devices to determine the delay to be added to the audio channel. The audio signal is then played back with a delay compared to the video signal. However, such solution is not adapted to 3D audio wherein the audio latency may be higher than the video latency. KR2012074700A proposes to use proprietary data on the HMDI connection to transmit a test sound to be rendered by the receiving device that sends back a return signal through the same HDMI, therefore allowing to determine the delay before providing the audio signal. This principle can be used only with a limited set of devices implementing this specific protocol and using that kind of connection.

It can therefore be appreciated that there is a need for a solution for synchronization of audio and video signals rendered on different devices that addresses at least some of the problems of the prior art. The present disclosure provides such a solution.

### SUMMARY

The present disclosure is about a device and a method for synchronizing the rendering of an audio/visual signal on different devices comprising at least an audio rendering device and a video rendering device, preventing lip sync issue. The method is based on a synchronization phase where a synchronization signal is emitted on each rendering device, the synchronization signals are captured by a microphone integrated into the synchronization module, the difference between the arrival times of the captured synchronization signals is measured and determines the delay to be applied either on the audio or the video signal in order to ensure accurate "lip sync". The delay information is provided to a demultiplexer function of the device hosting the electronic module allowing to delay either the video or the audio signal by caching the corresponding signal in its compressed form for the duration of the delay. The principle is using a particular characteristic of televisions, ensuring that the audio signal rendered on the loudspeaker integrated to the television is synchronized to the video signal rendered on the screen. This is done by internally delaying the audio rendering to adapt to video processing latency. The principle is to use the audio signal rendered by the loudspeakers of the television to determine the video latency which would hardly be measurable using other techniques. The synchronization module is preferably integrated in a television or a decoder.

In a first aspect, the disclosure is directed to a device for synchronizing video signals rendered on a first device and audio signals rendered on a second device comprising a lip sync synchronization signal generator configured to generate a first lip sync synchronization signal to be rendered by the first device and a second lip sync synchronization signal to be rendered by the second device; a microphone configured to capture sound waves corresponding to lip sync synchronization signals rendered by the first device and the second device; a demultiplexer configured to receive an audiovisual signal comprising an audio signal and a video signal and either forward the audio signal for processing and store temporarily a subset of the video signal in memory for a determined amount of delay before forwarding the video signal for processing, or forward the video signal for processing and store temporarily a subset of the audio signal in memory for a determined amount of delay before forwarding the audio signal for processing; a hardware processor configured to analyse captured sound waves to detect the first and second first lip sync synchronization signals captured by the microphone, determine corresponding video and audio processing latencies based on arrival times of the first and second lip sync synchronization signals; determine from the determined latencies the signal with smallest latency and the signal with highest latency among the audio and the video signals; obtain the determined amount of delay by taking the absolute value of the difference between the video latency and the audio latency; and instruct a demultiplexer to delay the signal with smallest latency for the determined amount of delay and to forward the signal with highest latency; and memory configured to store the subset of the audiovisual signal. In a first variant of first aspect, the device is a decoder further comprising a video decoder to decode the compressed video signal and provide the decoded signal to a television, and an audio decoder to decode the audio signal and to provide the decoded signal to a sound device, wherein the first lip sync synchronization signal is provided to the television and the second lip sync synchronization signal is provided to the sound device. In a second variant of first aspect, the device is a television further comprising a screen to display animated pictures and a loudspeaker to output sound, a video decoder to decode the video signal to obtain decoded animated pictures and provide the decoded animated pictures to the screen, and an audio decoder to decode the audio signal to obtain decoded sound and to provide the decoded sound to a sound device, wherein the first lip sync synchronization signal is provided to the loudspeaker and the second lip sync synchronization signal is provided to the sound device. In a third variant of first aspect, the device is an audiovisual bar further comprising a video decoder to decode the compressed video signal and provide the decoded animated pictures to a television, an audio decoder to decode the audio signal and to provide the decoded sound to an amplifier, an amplifier to amplify the decoded audio signal, and at least one loudspeaker to output sound waves corresponding to the amplified audio signal wherein the first lip sync synchronization signal is provided to the television and the second lip sync synchronization signal is provided to amplifier.

In variant embodiments of first aspect:
- the first lip sync synchronization signal comprises a superposition of two sine waves, a first sine wave at a first frequency and a second sine wave at a second frequency, and wherein the second lip sync synchronization signal comprises a superposition of two sine waves, a first sine wave at a third frequency and a second sine wave at a fourth frequency
- the device is configured to detect the first and second first lip sync synchronization signals by using short-time Fourier transform on a sliding window to detect the peak level of the two frequencies of the sine waves composing the first lip sync synchronization signals and the two frequencies of the sine waves composing the second lip sync synchronization signals.
- the device is configured to generate the lip sync synchronization signals by embedding an identifier into an audio signal using audio watermarking techniques and further comprises a watermark detector to detect the first and second first lip sync synchronization signals.
- the memory is configured to store the subset of the signal in its compressed form.

In a second aspect, the disclosure is directed to a method for synchronizing video signals rendered on a first device and audio signals rendered on a second device, comprising at an electronic module: generating a first lip sync synchronization signal transmitted to the first device and a second lip sync synchronization signal transmitted to the first device at the same time; recording sound waves corresponding to rendering of the lip sync synchronization signals by the first device and the second device; analysing recorded sound waves to detect the first and second first lip sync synchronization signals captured by the microphone, determining corresponding video and audio latencies based on arrival times of the first and second lip sync synchronization signals; determining from the determined latencies the signal with smallest latency and the signal with highest latency among the audio and the video signals; obtaining the determined amount of delay by taking the absolute value of the difference between the video latency and the audio latency; and instructing a demultiplexer to delay the signal with smallest latency of determined amount of delay and to forward the signal with highest latency;

In variant embodiments of first aspect:
- the first lip sync synchronization signal comprises a superposition of a first sine wave at a first frequency and a second sine wave at a second frequency, and wherein the second lip sync synchronization signal comprises a superposition of a first sine wave at a third frequency and a second sine wave at a fourth frequency.
- the detection of first and second first lip sync synchronization signals is done using short-time Fourier transform on a sliding window to detect the peak level of the two frequencies of the sine waves composing the first lip sync synchronization signals and the two frequencies of the sine waves composing the second lip sync synchronization signals.

In a third aspect, the disclosure is directed to a computer program comprising program code instructions executable by a processor for implementing any embodiment of the method of the second aspect.

In a fourth aspect, the disclosure is directed to a computer program product which is stored on a non-transitory computer readable medium and comprises program code instructions executable by a processor for implementing any embodiment of the method of the second aspect.

### BRIEF DESCRIPTION OF DRAWINGS

Preferred features of the present disclosure will now be described, by way of non-limiting example, with reference to the accompanying drawings, in which:
Figure 1 illustrates an example of a synchronization module according to the present principles;
Figure 2A illustrates an example setup of devices where the synchronization module is integrated in a decoder device;
Figure 2B illustrates an example setup of devices where the synchronization module is integrated in a television;
Figure 2C illustrates an example setup of devices where the synchronization module is integrated in an audiovisual bar;
Figure 3 represents a sequence diagram describing steps required to implement a method of the disclosure for synchronizing audio and video signals rendered on different devices; and
Figure 4 represents the lip sync synchronization signals, as provided to the devices, output by the devices and captured by the microphone in the example configuration of figure 2A.

### DESCRIPTION OF EMBODIMENTS

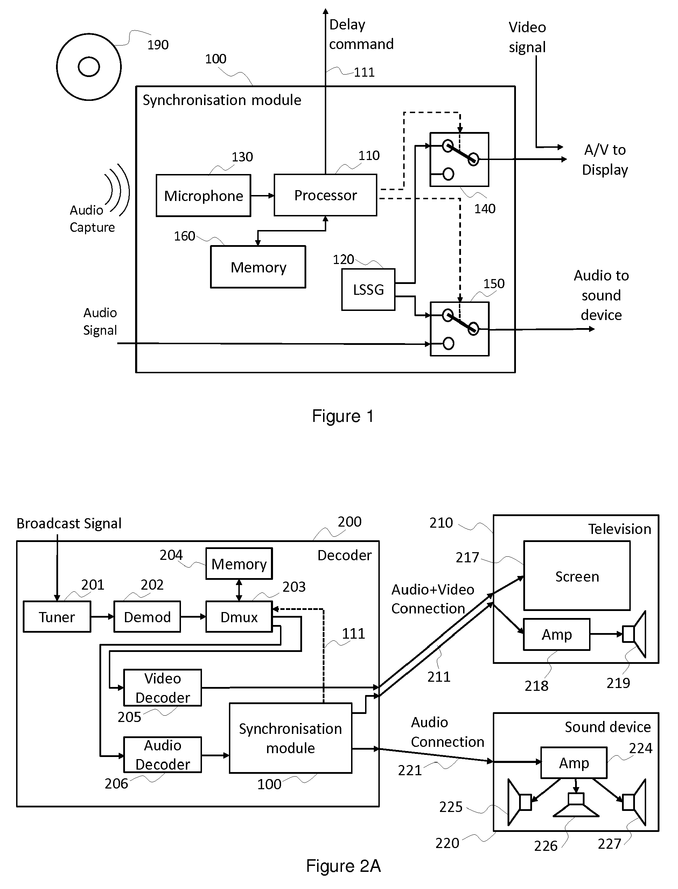

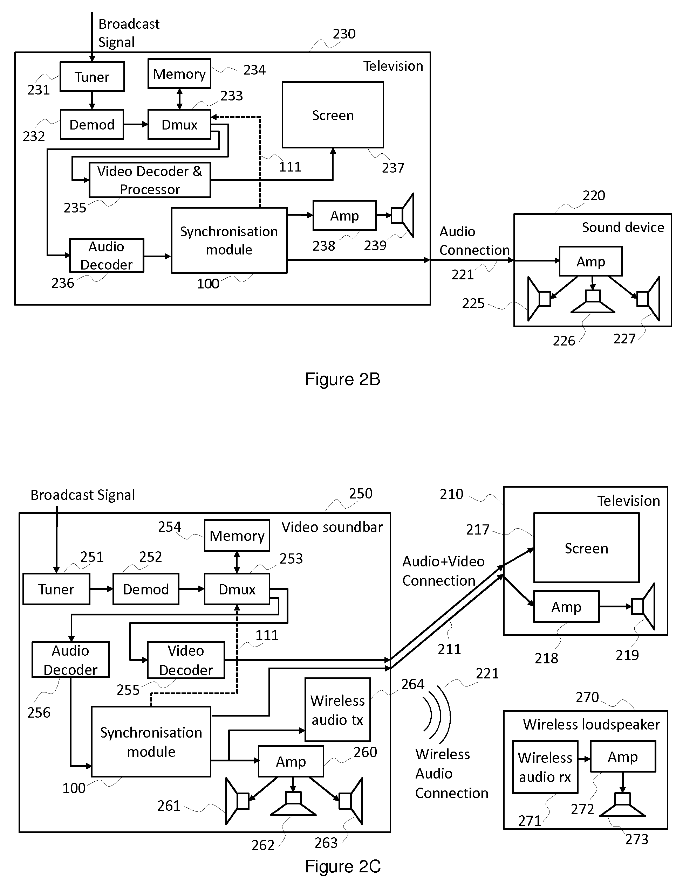

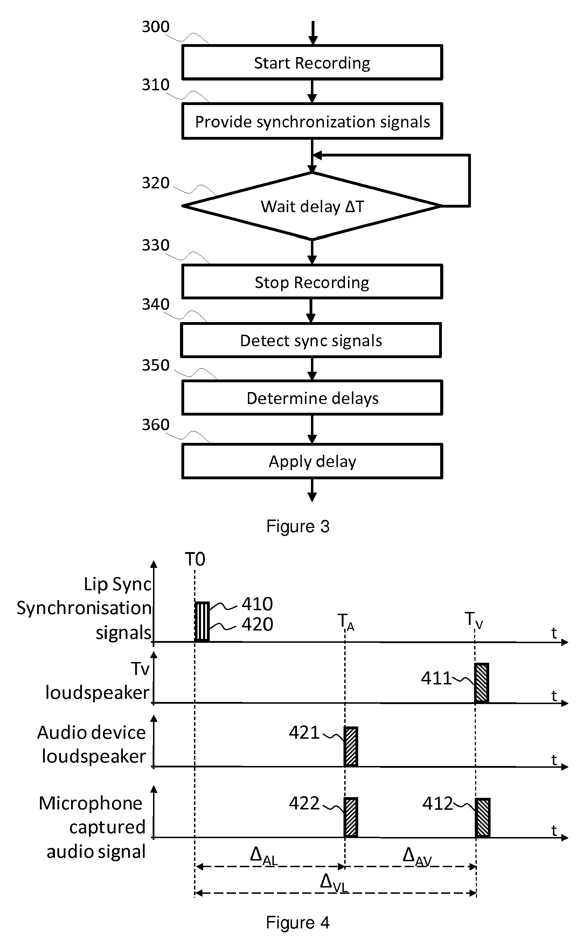

Figure 1 an example of synchronization module according to the present principles. Such a synchronization module can for example be integrated in a device such as a television, a decoder, or an audiovisual bar as respectively described in figures 2A, 2B and 2C. According to a specific and non-limiting embodiment of the principles, the synchronization module 100 comprises a hardware processor 110 configured to execute the method of at least one embodiment of the present disclosure, a Lip Sync Signal Generator (LSSG) 120 configured to generate lip sync synchronization signals, with either uncompressed (PCM) or compressed audio, to be rendered on loudspeakers, a microphone 130 configured to capture a first audio signal representing the sound surrounding the device, memory 160 configured to store at least the captured audio signal and switches 140 and 150 configured to select the audio signal to be provided to the external devices. The processor 110 is further configured to detect the different lip sync synchronization signals in the captured signal, measure the delay between the lip sync synchronization signals, determine whether the audio signal or the video signal should be delayed and the amount of delay to be applied, and issue a delay command 111 to perform the delay, comprising an indication of the signal to be delayed and the amount of delay to be applied. A non-transitory computer readable storage medium 190 stores computer readable program code comprising at least a synchronization application that is executable by the processor 110 to perform the synchronization operation according to the method described in figure 3.

Figure 2A illustrates an example setup of devices where the synchronization module 100 is integrated in a decoder device 200. The skilled person will appreciate that the illustrated device is simplified for reasons of clarity. In this context, a decoder device comprises any device that is able to decode an audio-visual content received through a network or stored on a physical support. A cable or satellite broadcast receiver, a Pay-TV or over-the-top set top box, a personal video recorder and a Blu-ray player are examples of decoders. The description will be based on the example of a broadcast cable receiver. Such a decoder 200 is connected to a television 210 through the audio video connection 211. HDMI is one exemplary audio video connection. Cinch/AV connection is another example. The decoder 200 is also connected to a sound device 220 through an audio connection 221. Sony/Philips Digital Interface Format (S/PDIF) is one example of audio connection for example using a fibre optic cable and a Toshiba Link (TOSLINK) connectors. Cinch/AV connection, HDMI or wireless audio are other examples.

The television 210 is configured to reproduce the sound and animated pictures received through the audio video connection 211 and comprises at least a screen 217 configured to display the animated pictures carried by the video signal, an audio amplifier 218 configured to amplify the audio signal received through the audio video connection 211 and at least a loudspeaker 219 to transform the amplified audio signal into sound waves. The sound device 220 is configured to reproduce the sound carried by the audio signal received through the audio connection 221 and comprises at least an audio amplifier 224 configured to amplify the audio signal and a set of loudspeakers 225, 226, 227 configured to transform the amplified audio signal into sound waves. In such a setup, the latency of the television 210 to display the video signal and of the sound device 220 to output the audio signal are unknown to the decoder 200 and vary according to the configuration of these devices. However, the latency of the television 210 to display the video signal and to output the audio signal is the same.

The decoder 200 comprises a tuner 201 configured to receive the broadcast signal, a demodulator (Demod) 202 configured to demodulate the received signal, a demultiplexer (Dmux) 203 configured to demultiplex the demodulated signal, thereby extracting at least a video stream and an audio stream, memory 204 configured to store subsets of the demultiplexed streams for example to process or to delay the video stream, a video decoder 205 configured to decode the extracted video stream, an audio decoder 206 configured to decode the extracted audio stream and a synchronization module 100 as described in figure 1 configured to provide a first lip sync synchronization signal to the television 210 and a second lip sync synchronization signal simultaneously to the sound device 220, capture the audio signal played back by the loudspeakers of the television 210 and of the sound device 220, detect the different lip sync synchronization signals, measure the reception time of the lip sync synchronization signal rendered by the television 210 and the reception time of the lip sync synchronization signal rendered by the sound device 220, determine the video latency and audio latency respectively by measuring the difference between the common emission time and the reception time of respectively the first lip sync synchronization signal and the second lip sync synchronization signal, determine the signal with smallest latency and the signal with highest latency among the audio and the video signals, determine the amount of delay to be applied by taking the absolute value of the difference between the video latency and the audio latency, request to delay the signal with smallest latency for the determined amount of delay and to forward the signal with highest latency through a delay command 111 to the demultiplexer 203. The demultiplexer 203 uses the memory 204 as a cache, storing temporarily a subset of either the video stream or the audio stream to generate the determined delay before playing it back.

In the preferred embodiment, the first and second lip sync synchronization signal are provided simultaneously as described here above. In an alternate embodiment, the first and second lip sync synchronization signal are not provided simultaneously but are separated by a delay. This implies measuring the video latency and audio latency independently by measuring the difference between the emission time of each signal and the reception time of each signal.

**Figure 2B** illustrates an example setup of devices where the synchronization module is integrated in a television 230. The skilled person will appreciate that the illustrated device is simplified for reasons of clarity.

The television 230 is connected to a sound device 220 through an audio connection 221. Sony/Philips Digital Interface Format (S/PDIF) is one example of audio connection for example using a fibre optic cable and Toshiba Link (TOSLINK) connectors. Cinch/AV connection, HDMI or wireless audio are other examples. The sound device 220 is identical to the one described in figure 2A.

The television 210 comprises a tuner 231 configured to receive the broadcast signal, a demodulator (Demod) 232 configured to demodulate the received signal, a demultiplexer (Dmux) 233 configured to demultiplex the demodulated signal, thereby extracting at least a video stream and an audio stream, memory 234 configured to store subsets of the demultiplexed streams for example to process or to delay the video stream, a video decoder & processor 235 configured to decode the extracted video stream and optionally process the decoded video stream, an audio decoder 236 configured to decode the audio stream, a screen 237 configured to display the decoded video signal, an audio amplifier 238 configured to amplify the decoded audio signal, at least one loudspeaker 239 to transform the amplified audio signal into acoustic waves and a synchronization module 100 as described in figure 1 configured to provide a first lip sync synchronization signal to the audio amplifier (Amp) 238 and a second lip sync synchronization signal simultaneously to the audio connection 221, capture the audio signal played back by the loudspeaker 239 and by the sound device 220, detect the different lip sync synchronization signals, measure the reception time of the lip sync synchronization signal rendered by the loudspeaker 239 of television 230 and the reception time of the lip sync synchronization signal rendered by the sound device 220, determine the video latency and audio latency respectively by measuring the difference between the common emission time and the reception time of respectively the first lip sync synchronization signal and the second lip sync synchronization signal, determine the signal with smallest latency and the signal with highest latency among the audio and the video signals, determine the amount of delay to be applied by taking the absolute value of the difference between the video latency and the audio latency, request to delay the signal with smallest latency for the determined amount of delay and to forward the signal with highest latency through a delay command 111 to the demultiplexer 233 that uses the memory 234 as a cache, storing temporarily a subset of either the video stream or the audio stream to generate the determined delay before playing it back.

The person skilled in the art will appreciate that, in both topologies of figure 2A and 2B, the delay is provided by caching the signal in compressed form, therefore being much more efficient and requiring less memory than if done after the decoding. This is particularly interesting when delaying the video since the high throughput of the decoded video signal would require an important amount of memory to achieve delays of hundreds of milliseconds when storing it in uncompressed form.

Figure 2C illustrates an example setup of devices where the synchronization module is integrated into an audiovisual bar 250. The skilled person will appreciate that the illustrated device is simplified for reasons of clarity. An audiovisual bar is the evolution of conventional sound bars currently used in combination with televisions to improve audio. An audiovisual bar will not only enhance the audio but also the video. An audiovisual bar is the combination of a decoder such as the device 200 described in figure 2A and a sound device such as the device 220 described in figure 2A with the optional addition of at least one wireless loudspeaker 270 receiving the audio signal from the audiovisual bar 250 over the wireless audio connection 221. Such an audiovisual bar 250 is configured to be connected to a television 210 through the audio video connection 211. The television 210 is identical to the one described in figure 2A.

The audiovisual bar 250 comprises a tuner 251 configured to receive the broadcast signal, a demodulator (Demod) 252 configured to demodulate the received signal, a demultiplexer (Dmux) 253 configured to demultiplex the demodulated signal, thereby extracting at least a video stream and an audio stream, memory 254 configured to store subsets of the demultiplexed streams for example to process or to delay the video stream, a video decoder 255 configured to decode the extracted video stream, an audio decoder 256 configured to decode the extracted audio stream, an amplifier (AMP) 260 configured to amplify the decoded audio signal, a set of loudspeakers 261, 262, 263 configured to transform the amplified audio signal into sound waves, a wireless audio transmitter (tx) 264 configured to deliver the decoded audio signal to at least a wireless loudspeaker 270 and a synchronization module 100 as described in figure 1 configured to provide a first lip sync synchronization signal on the audio video connection 211 towards the television, to provide a second lip sync synchronization signal to the wireless audio transmitter (tx) 264, capture the audio signal played back by the loudspeakers of the television 210 and by the wireless loudspeaker 270, detect the different lip sync synchronization signals, measure the reception time of the lip sync synchronization signal rendered by the loudspeaker 219 of television 210 and the reception time of the lip sync synchronization signal rendered by the wireless loudspeaker 270, determine the video latency and audio latency respectively by measuring the difference between the common emission time and the reception time of respectively the first lip sync synchronization signal and the second lip sync synchronization signal, determine the signal with smallest latency and the signal with highest latency among the audio and the video signals, determine the amount of delay to be applied by taking the absolute value of the difference between the video latency and the audio latency, request to delay the signal with smallest latency for the determined amount of delay and to forward the signal with highest latency through a delay command 111 to the demultiplexer 253 that uses the memory 254 as a cache, storing temporarily a subset of either the video stream or the audio stream to generate the determined delay before playing it back.

The person skilled in the art will appreciate that in such configuration, a calibration of the delays between loudspeaker 261, 262, 263 and the loudspeaker 273 of the wireless loudspeaker 270 needs to be performed to provide a good sound localization by the listener. This can be done using conventional audio calibration techniques to adjust both the delay and gains of each loudspeaker according to the listener's position. This is out of scope of this disclosure.

The person skilled in the art will appreciate that in the implementations of figures 2A, 2B and 2C, the synchronization module 100 can be implemented by software. In an alternate embodiment, the processor 110 of the synchronization module 100 is further configured to control the complete device and therefore implements other functions as well.

The principles of the disclosure apply to other devices than those described in figures 2A, 2B and 2C, for example a head mounted display where a 3D audio sound needs to be reconstructed from a plurality of audio source therefore requiring lengthy computations.

**Figure 3** represents a sequence diagram describing steps required to implement a method of the disclosure for synchronizing audio and video signals rendered on different devices. In step 300, the recording of the captured audio signal is started. This implies capturing the sound surrounding the device in which the synchronization module 100 is implemented through the microphone 130, digitizing the sound and storing corresponding data is in memory 160. In step 310, a first and a second lip sync synchronization signals are generated, the first signal being provided to the video rendering device and the second signal being provided to the audio rendering device. Those signals are differentiated so that it is possible to identify them in a captured audio signal comprising both lip sync synchronization signals. In step 320, the synchronization module 100 waits either for a determined time or until the detection of both lip sync synchronization signals in the captured signal. In step 330, the recording is stopped, for example after a delay of 3s. The captured signal is analysed in step 340 to detect the first and the second lip sync synchronization signals and to measure the capture time of both lip sync synchronization signals. In step 350, the difference between the captured time values is analysed to determine whether the audio signal or the video signal should be delayed and the amount of delay to be applied. The analysis is further detailed in the description of figure 4. In step 360, a delay command is issued, comprising the delay information determined in previous step. This delay is then applied to the appropriate signal by storing the corresponding amount of data of the corresponding stream.

In the preferred embodiment, these steps are triggered manually by the operator through the control interface of the device in which the synchronization module is integrated. In an alternate embodiment, these steps are triggered automatically when one of the devices of the setup is powered up. In an alternate embodiment corresponding to the setup of figure 2B, these steps are iterated automatically upon a configuration change of the television, for example when changing from a display mode in which minimal video processing is applied to a mode in which intensive video processing is required. In an alternate embodiment, these steps of the synchronizing method of figure 3 are triggered from time to time, for example every minute, and use a lip sync synchronization signal inaudible to the listener, for example using ultrasound frequencies or watermarks.

**Figure 4** represents the lip sync synchronization signals, as provided to the devices, output by the devices and captured by the microphone in the example configuration of figure 2A. At T0, the lip sync synchronization signal 410 related to the video rendering device is transmitted over the audio video connection 211, for example using HDMI, to the television 210. It is essential that a video signal is simultaneously provided to the video rendering device in order to have a video signal to be processed and to measure a video processing latency. At the same time T0, the lip sync synchronization signal 420 related to the sound device is transmitted over the audio connection 221, for example using S/PDIF or HDMI, to the sound device 220 either in uncompressed or compressed form. At time T_{A}, the sound device 220 emits sound wave 411 corresponding to the lip sync synchronization signal 410. This sound wave is captured 412 shortly after its emission by the synchronization module 100. Therefore the difference T_{A} - T0 = Δ_{AL} determines the value of the audio latency. Similarly, at time Tv, the television 210 emits sound wave 421 corresponding to the lip sync synchronization signal 420. This sound wave is captured 422 shortly after its emission. The difference Tᵥ - T0 = Δ_{VL} determines the value of the video latency. It is then determined which latency is the highest. In this case, Δ_{VL} > Δ_{AL} so that the audio signal needs to be delayed in order to solve the lip sync issue. When Δ_{VL} < Δ_{AL}, the video signal needs to be delayed in order to solve the lip sync issue. The absolute value of the difference between the two arrival times T_{A} and Tv determines the amount of delay to be applied: Δ_{AV} = | T_{A} - T_{V}|.

The person skilled in the art will appreciate that the time needed to travel the distance between the loudspeaker and the microphone is not taken into account here. Indeed, this delay is insignificant (several milliseconds for a conventional setup) compared to the latencies that we intend to measure (tens or hundreds of milliseconds) and therefore is considered to be null.

In the preferred embodiment, lip sync synchronization signals are comprising the superposition of two sine signals at different frequencies f1 and f2 for a duration of Δ_{T} and the frequencies chosen are different between the lip sync synchronization signal related to the video rendering device and the lip sync synchronization signal related to the sound device. An example application will use f1=1 kHz and f2=3 kHz for the lip sync synchronization signal related to the video rendering device and f'1=2kHz and f'2=4 kHz for the lip sync synchronization signal related to the audio rendering device. A signal duration Δ_{T} of 10ms is sufficient to enable a reliable detection. The detection of the signals 412 and 422 and determining of values Tᵥ and T_{A} are done for example as follows. The captured signal is sampled using a sliding window of 512 samples at a sampling rate of 48 kHz, corresponding to a size of sliding window nearly equivalent to the duration Δ_{T} of the signal to detect. A short-time Fourier transform is applied to the sliding window and the level values at frequencies f1, f2, f'1 and f'2 are measured. This operation is performed iteratively by moving the sliding window over the complete capture buffer, allowing to detect the peak levels at the designated frequencies. When the peak level is reached for the frequencies f1 and f2, the beginning of the sliding window corresponds to the capture of the lip sync synchronization signal related to the video rendering device, defines the value Tv of figure 4 and determines the video latency. As a reminder, when receiving an audio visual signal, a television will delay internally its audio signal if the latency of the video processing requires it, to avoid any lip sync issue. Therefore the audio and video of the television are always kept synchronized by the television so that the lip sync synchronization signal is here used to measure the video latency. When the peak level is reached for the frequencies f'1 and f'2, the beginning of the sliding window corresponds to the capture of the lip sync synchronization signal related to the audio rendering device, defines the value T_{A} of figure 4 and determines the audio latency.

In an alternate embodiment, lip sync synchronization signals are using ultrasound frequencies or at least over the maximal frequency detectable for a human ear, for example around 21 kHz. Such frequencies are not heard by users so that the synchronization method described herein can be performed nearly continuously, thus preventing any lip sync issue even when the user performs some change in the settings of his devices. In a less stringent operating mode, the synchronization method is triggered less frequently, each minute for example. It uses the same principles than the preferred embodiment, with the constraint that both the microphone and the loudspeakers must be able to handle those frequencies.

In an alternate embodiment, lip sync synchronization signals are using audio watermarks. This technique uses for example spread spectrum audio watermarking to embed an identifier that differentiates the lip sync synchronization signal related to the video rendering device and the lip sync synchronization signal related to the sound device. The advantage is that the audio watermark is inaudible to the listener, so that the synchronization method described herein can be performed nearly continuously, thus preventing any lip sync issue even when the user performs some change in the settings of his devices. In a less stringent operating mode, the synchronization method is triggered less frequently, each minute for example. The detection is performed using an appropriate, well known in the art, watermark detector.

In an alternate embodiment, lip sync synchronization signals are defined spatially using 3D audio encoding techniques. Such synchronization signals are required to measure the 3D audio processing latency when the audio device includes 3D audio capabilities. Furthermore, lip sync synchronization signals can be transmitted to the rendering devices in either uncompressed or compressed form. In the latter case, the rendering device comprises the appropriate decoder. The person skilled in the art will appreciate that the principles of the disclosure is adapted to handle not only processing latencies described above but also transmission latencies resulting from the use of wireless transmission technologies.

As will be appreciated by one skilled in the art, aspects of the present principles can take the form of an entirely hardware embodiment, an entirely software embodiment (including firmware, resident software, micro-code and so forth), or an embodiment combining hardware and software aspects that can all generally be defined to herein as a "circuit", "module" or "system". Furthermore, aspects of the present principles can take the form of a computer readable storage medium. Any combination of one or more computer readable storage medium(s) can be utilized. It will be appreciated by those skilled in the art that the diagrams presented herein represent conceptual views of illustrative system components and/or circuitry embodying the principles of the present disclosure. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown. A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

## Claims

1. A device (200, 230, 250) for synchronizing video signals rendered on a first device (210, 230) and audio signals rendered on a second device (220, 250), comprising:
- a lip sync synchronization signal generator (120) configured to generate a first lip sync synchronization signal (410) to be rendered together with a video signal by the first device and a second lip sync synchronization signal (420) to be rendered by the second device;
- a microphone (130) configured to capture sound waves corresponding to lip sync synchronization signals (411, 421) rendered by the first device and the second device;
- a demultiplexer (203, 233, 253) configured to:
- receive an audiovisual signal comprising an audio signal and a video signal; and
- either forward the audio signal for processing and store temporarily a subset of the video signal in memory (204, 234, 254) for a determined amount of delay before forwarding the video signal for processing, or forward the video signal for processing and store temporarily a subset of the audio signal in memory (204, 234, 254) for a determined amount of delay before forwarding the audio signal for processing;
- a hardware processor (110) configured to:
- analyse captured sound waves to detect the first (412) and second (422) first lip sync synchronization signals captured by the microphone,
- determine corresponding video and audio processing latencies based on arrival times of the first (412) and second (422) lip sync synchronization signals;
- determine from the determined latencies the signal with smallest latency and the signal with highest latency among the audio and the video signals;
- obtain the determined amount of delay by taking the absolute value of the difference between the video latency and the audio latency; and
- instruct a demultiplexer (203, 233, 253) to delay the signal with smallest latency for the determined amount of delay and to forward the signal with highest latency; and
- memory (204, 234, 254) configured to store the subset of the audiovisual signal.

2. The device of claim 1 wherein the device is a decoder (200) further comprising a video decoder (205) to decode the compressed video signal and provide the decoded video signal to a television (210), and an audio decoder (206) to decode the audio signal and to provide the decoded audio signal to a sound device (220), wherein the first lip sync synchronization signal (410) is provided to the television (210) and the second lip sync synchronization signal (420) is provided to the sound device (220).

3. The device of claim 1 wherein the device is a television (210) further comprising a screen (217) to display animated pictures and a loudspeaker (219) to output sound, a video decoder (215) to decode the video signal to obtain decoded animated pictures and provide the decoded animated pictures to the screen (217), and an audio decoder (216) to decode the audio signal to obtain decoded sound and to provide the decoded sound to a sound device (220), wherein the first lip sync synchronization signal (410) is provided to the loudspeaker (219) and the second lip sync synchronization signal (420) is provided to the sound device (220).

4. The device of claim 1 wherein the device is an audiovisual bar (250) further comprising a video decoder (255) to decode the compressed video signal and provide the decoded animated pictures to a television (210), an audio decoder (256) to decode the audio signal and to provide the decoded sound to an amplifier (260), an amplifier (260) to amplify the decoded audio signal, and at least one loudspeaker (261, 262, 263) to output sound waves corresponding to the amplified audio signal, wherein the first lip sync synchronization signal (410) is provided to the television (210) and the second lip sync synchronization signal (420) is provided to amplifier (260).

5. The device of any one of claims 1 to 4 wherein the first lip sync synchronization signal (410) comprises a superposition of two sine waves, a first sine wave at a first frequency and a second sine wave at a second frequency, and wherein the second lip sync synchronization signal (420) comprises a superposition of two sine waves, a first sine wave at a third frequency and a second sine wave at a fourth frequency.

6. The device of any one of claims 1 to 5 wherein the device is further configured to detect (340) the first and second first lip sync synchronization signals (412, 422) by using short-time Fourier transform on a sliding window to detect the peak level of the two frequencies of the sine waves composing the first lip sync synchronization signals and of the two frequencies of the sine waves composing the second lip sync synchronization signals.

7. The device of any one of claims 1 to 4 wherein the device is further configured to generate the lip sync synchronization signals (412, 422) by embedding an identifier into an audio signal using audio watermarking techniques and further comprises a watermark detector to detect the first (412) and second (422) first lip sync synchronization signals.

8. The device of any of claims 1 to 7 wherein memory is configured to store the subset of the signal in its compressed form.

9. A method for synchronizing video signals rendered on a first device (210, 230) and audio signals rendered on a second device (220, 250), comprising at an electronic module 100:
- generating (310) a first lip sync synchronization signal transmitted to the first device and a second lip sync synchronization signal transmitted to the first device at the same time;
- recording (320) sound waves corresponding to rendering of the lip sync synchronization signals by the first device and the second device;
- analysing recorded sound waves to detect (340) the first (412) and second (422) first lip sync synchronization signals captured by the microphone,
- determining (350) corresponding video and audio latencies based on arrival times of the first (412) and second (422) lip sync synchronization signals;
- determining from the determined latencies the signal with smallest latency and the signal with highest latency among the audio and the video signals;
- obtaining the determined amount of delay by taking the absolute value of the difference between the video latency and the audio latency; and
- instructing a demultiplexer to delay the signal with smallest latency of determined amount of delay and to forward the signal with highest latency.
- The method of claim 9 wherein the first lip sync synchronization signal (410) comprises a superposition of a first sine wave at a first frequency and a second sine wave at a second frequency, and wherein the second lip sync synchronization signal (420) comprises a superposition of a first sine wave at a third frequency and a second sine wave at a fourth frequency.

10. The method of claim 9 wherein the detection of first and second first lip sync synchronization signals is done using short-time Fourier transform on a sliding window to detect the peak level of the two frequencies of the sine waves composing the first lip sync synchronization signals and the two frequencies of the sine waves composing the second lip sync synchronization signals.

11. The method of claim 9 wherein the lip sync synchronization signals (410, 420) are identified by embedding audio watermarks.

12. Computer program comprising program code instructions executable by a processor (110) for implementing the steps of a method according to at least one of claims 9 to 11.

13. Computer program product which is stored on a non-transitory computer readable medium (190) and comprises program code instructions executable by a processor (110) for implementing the steps of a method according to at least one of claims 9 to 11.
